# EUROPÄISCHE PATENTSCHRIFT

(11) **EP 2 531 797 B1**
(45) Veröffentlichungstag und Bekanntmachung des Hinweises auf die Patenterteilung: **16.08.2017**
(21) Anmeldenummer: 11701264.1
(22) Anmeldetag: 27.01.2011
(51) Int. Cl.: F27B 7/20, F27D 17/00

(54) **VERFAHREN UND VORRICHTUNG ZUR REAKTIVITÄTSSTEIGERUNG VON FEUCHTEM BRENNSTOFF**
METHOD AND APPARATUS FOR INCREASING THE REACTIVITY OF DAMP FUE
PROCÉDÉ ET APPAREIL PERMETTANT D'AUGMENTER LA RÉACTIVITÉ D'UN COMBUSTIBLE HUMIDE

(30) Priorität: 06.02.2010 DE 102010007094
(43) Veröffentlichungstag der Anmeldung: 12.12.2012
(73) Patentinhaber: KHD Humboldt Wedag GmbH, 51067 Köln (DE)
(72) Erfinder: SCHRÖDER, Ernst, B-4760 Büllingen (BE); KNOCH, Alexander, 53797 Lohmar (DE)
(86) Internationale Anmeldenummer: PCT/EP2011/051120
(87) Internationale Veröffentlichungsnummer: WO 2011/095426

(56) Entgegenhaltungen:
- WO-A1-2009/110036
- DE-A1- 2 931 214
- JP-A- 62 069 017
- US-A1- 2010 006 012

## Beschreibung

Die Erfindung betrifft ein Verfahren zur Reaktivitätssteigerung von feuchtem Brennstoff in einer Anlage zur Herstellung von Zement und eine dazu korrespondierende Anlage.

Zur Herstellung von Zement wird zum Trocknen und entsäuern (Calcinieren) von Kalkstein, sowie für das Brennen des fertigen Zementklinkers ein großer Energieeintrag benötigt, um die endotherme Reaktion aufrecht zu erhalten. Um den großen Wärmemengenanspruch im Herstellungsprozess wirtschaftlich gerecht zu werden, wird in der Regel auf verschiedene Brennstoffe zurückgegriffen, wobei höherwertige Brennstoffe mit vorhersagbarem und gleichmäßigem Abbrandverhalten an den Stellen eingesetzt wird, wo die exakte Wärmemengensteuerung sehr wichtig ist und andere, niederwertige Brennstoffe werden an den Stellen im Verfahren eingesetzt, wo eine Variation der Wärmemengenleistung in einem bestimmten Toleranzfenster akzeptabel ist.

Der Einsatz von niederwertigen Brennstoffen umfasst dabei nicht nur hochkalorische Abfälle, wie beispielsweise zu vernichtende Lösemittel oder im wesentlichen wasserfreie Altreifen, sondern auch feuchte Brennstoffe in Form von feuchtem Holz oder Pflanzenmaterial, wie Baumschnitt oder andere pflanzliche Abfälle. In der DE 35 42 004 A1 werden feuchte Schlämme aus Kläranlagen verbrannt. Wäre es möglich, die Verbrennungsvorgänge niederwertiger Brennstoffe zu beherrschen, so wäre es auch möglich, an den Stellen niederwertige Brennstoffe einzusetzen, in denen bisher ausschließlich höherwertige Brennstoffe zum Einsatz kamen. Um an diesen Stellen niederwertigen Brennstoff nutzen zu können, ist es also notwendig, gerade die Zündwilligkeit des niederwertigen Brennstoffes zu erhöhen und das Abbrandverhalten zu vergleichmäßigen.

Zwar ist es bekannt, beispielsweise Holz in speziellen Öfen durch Pyrolyse und Vergasung besonders effektiv zu verbrennen, jedoch erfordert die Pyrolyse und Vergasung selbst hohe Wärmemengen, so dass der Einsatz der niederwertigen Brennstoffe kaum zu wirtschaftlichem Vorteil führt.

Aufgabe der Erfindung ist es daher, die Reaktivität von niederwertigen, insbesondere feuchten Brennstoffen in einer Anlage von Zement in wirtschaftlicher Weise, also kostengünstig, zu erhöhen und zu vergleichmäßigen.

Die erfindungsgemäße Aufgabe wird gelöst durch ein Verfahren aufweisend die Schritte:
- Verdichten von Förderluft mit anschließender Erwärmung der verdichteten Förderluft in einem Wärmetauscher, parallel dazu
- Zerkleinern des feuchten Brennstoffs in einer Zerkleinerungsvorrichtung, und
- Zuführen des zerkleinerten Brennstoffs in die in die verdichtete Förderluft,
- Transportieren des zerkleinerten Brennstoffs in der verdichteten Förderluft zu einem Brenner,
wobei eine Erwärmung der verdichteten Förderluft durch die Abwärme eines in der Anlage zur Herstellung von Zement vorhandenen Klinkerkühlers vorgenommen wird. Weitere vorteilhafte Ausgestaltungen der Verfahrenserfindung sind in den Unteransprüchen angegeben. Korrespondierend zu den Verfahrensschritten wird die erfindungsgemäße Aufgabe anlagentechnisch gelöst durch eine Anlage zur Durchführung des Verfahrens aufweisend einen Verdichter für Förderluft, ein dem Verdichter folgenden Wärmetauscher, eine Zerkleinerungsvorrichtung für feuchten Brennstoff, eine Zuführvorrichtung zur Zuführung von zerkleinertem Brennstoff in die verdichtete und erwärmte Förderluft, einen Brenner, wobei der Wärmetauscher in der primären oder der sekundären Abluftleitung eines in der Anlage zur Herstellung von Zement vorhandenen Klinkerkühlers angeordnet ist. Weitere vorteilhafte Ausgestaltungen der Anlagenerfindung sind in den Unteransprüchen zu Anspruch 6 angegeben.

Erfindungswesentlich ist, dass der frisch zerkleinerte Brennstoff mit der reichlich verfügbaren Abwärme eines Klinkerkühlers über die zum Transport des Brennstoffs notwendige Förderluft erwärmt wird. Durch die Erwärmung wird in dem Brennstoff vorhandene Feuchtigkeit aus dem Brennstoff getrieben, wodurch der Brennstoff selbst eine erhöhte Zündwilligkeit aufweist, und durch die Zerkleinerung und Trocknung des niederwertigen Brennstoffes wird das Abbrandverhalten vergleichmäßigt. In dem erfindungsgemäßen Verfahren wird die vorhandene Feuchtigkeit nicht vollständig aus dem Brennstoff und der Förderluft ausgetrieben. Vielmehr ist die vorhandene Feuchtigkeit im Gasraum der Förderluft vorhanden und erreicht auch die Abbrandstelle, wo sie der Flamme immer noch Wärme durch ihre spezifische Wärmekapazität entzieht. Dabei befindet sich aber die Feuchtigkeit schon bei Ankunft an der Brennstelle im Gasraum, so dass die latente Wärme zur Verdampfung in der Brennerflamme nicht erzeugt werden muss.

Die Erfindung macht sich die reichlich verfügbare Wärme des Klinkerkühlers zu nutze, wobei diese Abwärme, insbesondere die sekundäre Abwärme des Klinkerkühlers, bisher aufgrund der vergleichsweise niedrigen Temperatur der Kühlergase kaum genutzt werden konnte.

Ein Klinkerkühler kühlt den unter Einsatz hoher Temperaturen frisch gesinterten Klinker. Am Anfang des Klinkerkühlers weist die dort vorherrschende primäre Kühlluft im Klinkerkühler eine noch sehr hohe Temperatur auf, wobei diese primäre Kühlhluft, als sogenannte Sekundärluft zum Unterhalt der Verbrennung und zur Rückführung der Wärme zurück in den Drehrohrofen gedrückt wird. Eine weitere Kühlluftfraktion des Kühlers mit geringfügig niedrigerer Temperatur wird als sogenannte Tertiärluft in einen Calcinator der Anlage zur Entsäuerung von Kalkstein transportiert, wobei die heiße Tertiärluft zur Förderung des Ausbrandes von Brennstoff in einem in der Anlage vorhandenen Calcinator zur endothermen Entsäuerung dient. Da der Klinker im Kühler eine bestimmte Wegstrecke zurücklegt, weist die später, weiter am Ende des Klinkerkühlers entnommene Kühlluft eine nur noch geringere Temperatur auf. Wenngleich noch größere Wärmemengen in dieser sekundären Kühlluft vorhanden sind, ist die Temperatur der Kühlluft vergleichsweise gering, etwa 180°C bis 300°C. Abluft mit dieser Temperatur ist an nur sehr wenigen Stellen noch gewinnbringend einsetzbar.

In besonderer Ausgestaltung der Erfindung wird gerade die sekundäre Kühlluft zur Trocknung oder Austreibung der Feuchtigkeit aus den niederwertigen Brennstoffen verwendet, wodurch die sekundäre, wenig wertvolle Kühlluft zur wirtschaftlichen Aufbereitung von feuchten und niederwertigen Brennstoffen genutzt wird.

In weiterer Ausgestaltung der Erfindung ist vorgesehen, dass kumulativ oder alternativ die primäre Kühlluft zur Reaktivitätssteigerung des feuchten und niederwertigen Brennstoffes eingesetzt wird. Die primäre Kühlluft ist bereits so heiß, dass der niederwertige Brennstoff zum Teil pyrolysiert, wodurch brennbare Gase entstehen. Dieses in der Förderluft verteilte Gas unterstützt den Abbrand des teilpyrolysierten Brennstoffs in vorteilhafter Weise durch Aufrechthaltung eines freiwillig einsetzenden Abbrands, der deshalb nicht durch einen höherwertigen Brennstoff, wie z.B. Öl oder gar Gas, aufrecht erhalten werden muss.

In weiterer Ausgestaltung der Erfindung ist vorgesehen, den Wärmetauscher in die Tertiärluftzuleitung einzubauen, so dass die Abwärme der Tertiärluft zur Austreibung der Feuchtigkeit aus dem niederwertigen Brennstoff verwendet wird. Durch diese Maßnahme lässt sich in vorteilhafter Weise die Temperatur der Tertiärluft steuern. Durch die Steuerung der Tertiärluft lässt sich wiederum das Temperaturniveau im Calcinator steuern, der zur Vermeidung der NOx-Emission, in bestimmten Temperaturfenstern, die nicht zu heiß sein dürfen, betrieben werden muss.

Genauso wie die optimale Temperaturkontrolle zur Flamm- und Abbrandkontrolle am Brenner, der mit Tertiärluft unterstützt wird, ist auch eine optimale Temperaturkontrolle zur Flamm- und Abbrandkontrolle im Brenner zur Erzeugung der Wärme zum Klinkerbrennen hilfreich, einen gleichmäßigen Abbrand zu kontrollieren. Hierzu hat es sich als vorteilhaft erwiesen, wenn die Temperatur der am Brenner ankommenden Förderluft eine bestimmte Temperatur nicht unterschreitet. Daher ist es vorteilhaft, wenn eine Bypassleitung parallel zum Wärmetauscher geschaltet ist, durch welche die Temperatur der am Brenner ankommenden Förderluft mit dem darin suspendierten Brennstoff eingestellt werden kann.

Schließlich hat es sich als vorteilhaft erwiesen, wenn ein Teil der verdichteten und erwärmten Förderluft durch eine Abzweigung in die Zerkleinerungsvorrichtung geleitet wird, wo der Brennstoff im Entstehen von Feuchtigkeit befreit wird. Dies hat wiederum zur Folge, dass der feuchte Brennstoff keine Anbackungen in der Zerkleinerungsmaschine ausbildet, durch welche die Zerkleinerungsmaschine in ihrer Durchsatzleistung womöglich beeinträchtigt wird.

Die Erfindung wird anhand der folgenden Figuren näher erläutert.

Es zeigen:
- Figur 1: ein schematisches Flussdiagramm des erfindungsgemäßen Verfahrens,
- Figur 2: ein Flussdiagramm des erfindungsgemäßen Verfahrens mit zu den Verfahrensschritten korrespondierenden Schaltsymbolen,
- Figur 3: ein Flussdiagramm einer Ausgestaltung des erfindungsgemäßen Verfahrens mit zu den Verfahrensschritten korrespondierenden Schaltsymbolen.

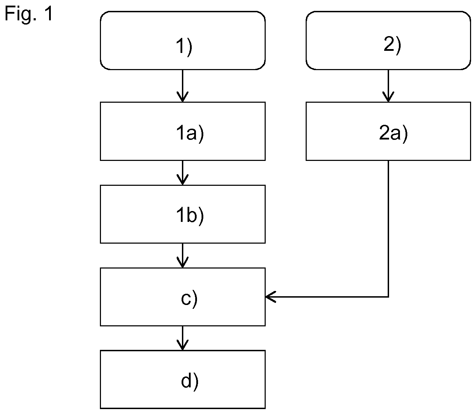

In Figur 1 ist ein schematisches Ablaufdiagramm gezeigt, in welchem die erfindungsgemäßen Verfahrensschritte symbolisch angeordnet sind. Das Verfahren beginnt bei 1 und weist als ersten Verfahrensschritt 1 a das Verdichten der Förderluft in einem Verdichter auf und wird gefolgt von einem zweiten Verfahrensschritt 1 b, in dem die verdichtete Förderluft in einem Wärmetauscher erwärmt wird. Die Förderluft erwärmt sich in Schritt 1 a bereits beim Verdichten und wird durch den Wärmetauscher in Schritt 1 b weiter aufgeheizt. Zwar ist der Temperaturunterschied zwischen der durch Verdichtung bereits erwärmten Förderluft und der Wärme im Wärmetauscher in Schritt 1 b geringer, als wenn die Förderluft zunächst erwärmt würde und dann verdichtet würde, jedoch würde die zuletzt genannte Schrittfolge dazu führen, dass der Verdichter zu stark erwärmt würde. Des Weiteren hat die verdichtete Luft eine höhere Wärmeleitfähigkeit als weniger verdichtete Förderluft. Dadurch wird der Nachteil des geringeren Wärmeunterschieds, der für einen geringeren Wärmeübergang ursächlich ist, durch die höhere Wärmeleitfähigkeit ausgeglichen. Nach Verdichtung in Schritt 1a und Erwärmung in Schritt 1 b wird die Förderluft in Schritt c mit zerkleinertem Brennstoff vereinigt. Der Brennstoff wurde, startend bei Schritt 2, zunächst in einer Zerkleinerungsvorrichtung in Schritt 2a zerkleinert und wird dann, wie oben erwähnt, dann der Förderluft bei c zugeführt. Gemeinsam wird die heiße Förderluft mit dem zerkleinerten Brennstoff in Schritt d zu einem Brenner befördert.

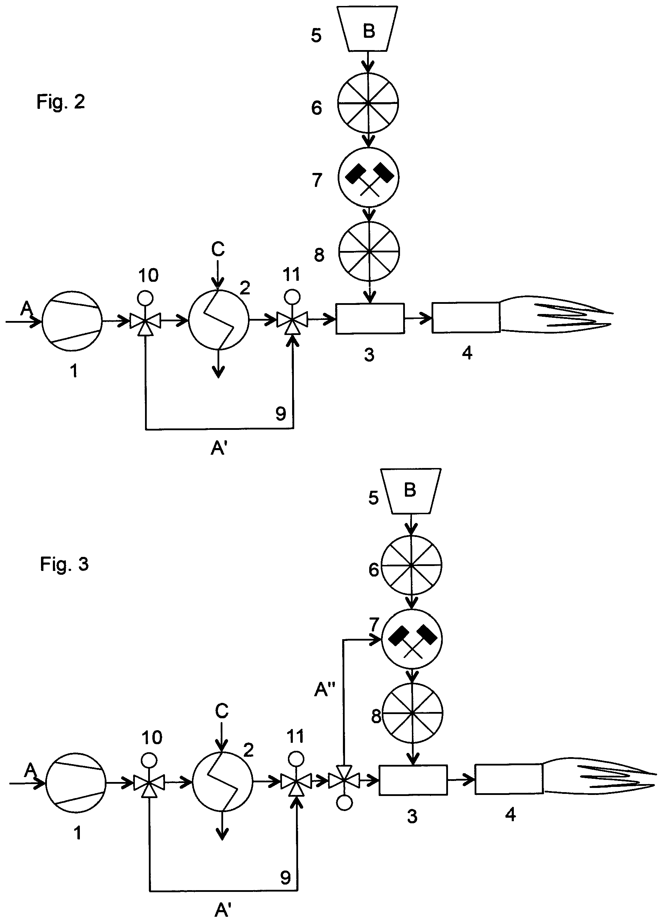

In Figur 2 ist das erfindungsgemäße Verfahren durch ein Flussdiagram mit korrespondierenden Schaltsymbolen erläutert. Beginnend auf der linken Seite des Flussdiagramms wird ein Förderluftstrom A in einem Verdichter 1 verdichtet und in einem Wärmetauscher 2 erwärmt, wo die abgeleitete Wärme aus einem Klinkerkühler in Form von heißer Kühlerabluft (C) auf die Förderluft (A) übertragenwird.. Die verdichtete und erwärmte Förderluft wird in einer Zugabevorrichtung 3 mit zerkleinertem Brennstoff B vereinigt, und anschließend zu einem Brenner 4 transportiert, wo der Brennstoff B mit erhöhter Zündwilligkeit und vergleichmäßigtem Abbrandverhalten verbrennt. Der zuvor genannte Brennstoff B wird aus einem Bunker 5 über eine Dosiervorrichtung oder einem Zuteiler 6 in eine Zerkleinerungsvorrichtung 7 transportiert und dort zerkleinert. Von dort aus wird der zerkleinerte Brennstoff B über einen weiteren Zuteiler 8 mit der verdichteten Förderluft A vereint. Um die Temperatur der den Brenner 4 erreichenden Förderluft A einzustellen, vor allem bei wechselnder Zusammensetzung des feuchten, niederwertigen Brennstoffes B ist vorgesehen, mit Hilfe von zwei Ventilen 10 und 11 einen Bypass 9 für einen Bypassstrom A' aus Förderluft an dem Wärmetauscher 2 vorbeizuführen. Durch diesen Bypass 9 kann die Förderluft A auf einem notwendigen oder einfach nur gleichmäßigen Temperaturniveau gehalten werden. Erfindungswesentlich ist, dass die Abwärme eines in der Anlage vorhandenen Klinkerkühlers zur Entfeuchtung der niederwertigen, feuchten Brennstoffe verwendet wird. Diese wird durch primäre oder sekundäre Kühlerabluft (C) in Wärmetauscher 2 von der Kühlerabluft (C) auf die Förderluft (A) übertragen. Genau diese Abwärme wird bisher aufgrund der vergleichsweise niedrigen Temperatur verworfen. Die Erfindung macht sich diese bisher als nicht nutzbare Wärme aufgefasste Klinkerkühlerabluft (C) zu nutze.

Schließlich ist in Figur 3 ein zu Figur 2 ähnliches Flussdiagramm dargestellt, wobei durch ein zusätzliches Ventil 12 ein Teilstrom A" der Förderluft A vor Vereinigung mit dem zerkleinerten Brennstoff B abgezweigt und der Zerkleinerungsvorrichtung 7 zugeführt wird. Hierdurch kann der Brennstoff B bereits bei der Zerkleinerung entfeuchtet werden, wodurch Anbackungen in der Zerkleinerungsvorrichtung vermieden werden, die für eine Leistungsverringerung der Zerkleinerungsvorrichtung 7 ursächlich sein können.

**BEZUGSZEICHENLISTE**

| | | | |
|---|---|---|---|
| A | Förderluftstrom | 4 | Brenner |
| A' | Bypassstrom | 5 | Bunker |
| A" | Teilgasstrom | 6 | Zuteiler |
| B | Brennstoff | 7 | Zerkleinerungsvorrichtung |
| C | Klinkerkühlerabluft | 8 | Zuteiler |
| | | 9 | Bypass |
| 1 | Vedichter | 10 | Ventil |
| 2 | Wärmetauscher | 11 | Ventil |
| 3 | Zubringvorrichtung | 12 | Ventil |

## Patentansprüche

1. Verfahren zur Reaktivitätssteigerung von feuchtem Brennstoff in einer Anlage zur Herstellung von Zement aufweisend die Schritte:
- Verdichten (1a) von Förderluft (A), wobei sich die Förderluft erwärmt, mit anschließender Erwärmung (1 b) der verdichteten Förderluft (A) in einem Wärmetauscher (2) durch die Abwärme (C) eines in der Anlage zur Herstellung von Zement vorhandenen Klinkerkühlers, parallel dazu
- Zerkleinern (2a) des feuchten Brennstoffs (B) in einer Zerkleinerungsvorrichtung (7), und
- Zuführen (c) des zerkleinerten Brennstoffs (B) in die in die verdichtete Förderluft A,
- Transportieren (d) des zerkleinerten Brennstoffs (B) in der verdichteten Förderluft (A) zu einem Brenner (4).

2. Verfahren nach Anspruch 1, wobei die Abwärme der primären Abluft (C) oder der sekundären Abluft (C) des Klinkerkühlers entnommen wird.

3. Verfahren nach Anspruch 1, wobei der Wärmetauscher in der Tertiarluftleitung angeordnet ist und dadurch die Wärme der Tertiärluftleitung entnommen wird.

4. Verfahren nach einem der Ansprüche 1 bis 3, wobei eine Bypassleitung (9) parallel zum Wärmetauscher (2) geschaltet ist, durch welche die Temperatur der am Brenner (4) ankommenden Förderluft (A) eingestellt wird.

5. Verfahren nach einem der Ansprüche 1 bis 4, wobei durch eine Abzweigung in Form eines Ventils (10) unmittelbar hinter dem Wärmetauscher (2) der verdichteten Förderluft (A) eine Teilgasmenge (A*) entnommen und der Zerkleinerungsvorrichtung (7) zugeführt wird.

6. Anlage zur Durchführung des Verfahrens nach einem der Ansprüche 1 bis 5, aufweisend
- einen Verdichter (1) für Förderluft (A),
- ein dem Verdichter (1) folgenden Wärmetauscher (2), der in der primären oder der sekundären Abluftleitung eines in der Anlage zur Herstellung von Zement vorhandenen Klinkerkühlers angeordnet ist.
- eine Zerkleinerungsvorrichtung (7) für feuchten Brennstoff (B),
- eine Zuführvorrichtung (3) zur Zuführung von zerkleinertem Brennstoff (B) in die verdichtete und erwärmte Förderluft (A),
- einen Brenner.

7. Anlage zur Durchführung des Verfahrens nach einem der Ansprüche 1 bis 5, aufweisend
- einen Verdichter (1) für Förderluft (A),
- ein dem Verdichter (1) folgenden Wärmetauscher (2), der in der Tertiärluftleitung der Anlage zur Herstellung von Zement angeordnet ist,
- eine Zerkleinerungsvorrichtung (7) für feuchten Brennstoff (B),
- eine Zuführvorrichtung (3) zur Zuführung von zerkleinertem Brennstoff (B) in die verdichtete und erwärmte Förderluft (A),
- einen Brenner (4),

8. Anlage nach Anspruch 6 oder 7, **dadurch gekennzeichnet, dass** eine Bypassleitung (9) parallel zum Wärmetauscher (2) vorgesehen ist, durch welche die Temperatur in der den Brenner (4) erreichenden Förderluft (A) einstellbar ist.

9. Anlage nach Anspruch 6 oder 7, **dadurch gekennzeichnet, dass** eine Abzweigung in Form eines Ventils (10) für die verdichtete und erwärmte Förderluft (A) vorhanden ist, durch welche die verdichtete und erwärmte Förderluft (A) der Zerkleinerungsvorrichtung (7) zuführt.

## Claims

1. Method for increasing the reactivity of moist fuel in a cement production plant, comprising the steps:
- compression (1a) of conveying air (A), wherein the conveying air is warmed, with subsequent warming (lb) of the compressed conveying air (A) in a heat exchanger (2) by the waste heat (C) of a clinker cooler present in the cement production plant, parallel thereto,
- comminution (2a) of the damp fuel (B) in a comminuting device (7), and
- feeding (c) of the comminuted fuel (B) into the compressed conveying air (A),
- transportation (d) of the comminuted fuel (B) in the compressed conveying air (A) to a burner (4).

2. Method according to Claim 1, wherein the waste heat is extracted from the primary waste air (C) or the secondary waste air (C) of the clinker cooler.

3. Method according to Claim 1, wherein the heat exchanger is disposed in the tertiary air line and the heat is thereby extracted from the tertiary air line.

4. Method according to one of Claims 1 to 3, wherein connected parallel to the heat exchanger (2) is a bypass line (9), by which the temperature of the conveying air (A) arriving at the burner (4) is adjusted.

5. Method according to one of Claims 1 to 4, wherein, by a branch in the form of a valve (10) directly behind the heat exchanger (2), a partial gas quantity (A") is extracted from the compressed conveying air (A) and fed to the comminuting device (7).

6. Plant for implementing the method according to one of Claims 1 to 5, comprising
- a compressor (1) for conveying air (A),
- a heat exchanger (2) following the compressor (1), which heat exchanger is disposed in the primary or the secondary waste air line of a clinker cooler present in the cement production plant,
- a comminuting device (7) for damp fuel (B),
- a feed device (3) for feeding comminuted fuel (B) into the compressed and warmed conveying air (A),
- a burner (4).

7. Plant for implementing the method according to one of Claims 1 to 5, comprising
- a compressor (1) for conveying air (A),
- a heat exchanger (2) following the compressor (1), which heat exchanger is disposed in the tertiary air line of the cement production plant,
- a comminuting device (7) for damp fuel (B),
- a feed device (3) for feeding comminuted fuel (B) into the compressed and warmed conveying air (A),
- a burner (4).

8. Plant according to Claim 6 or 7, **characterized in that** provided parallel to the heat exchanger (2) is a bypass line (9), by which the temperature in the conveying air (A) reaching the burner (4) is adjustable.

9. Plant according to Claim 6 or 7, **characterized in that** a branch in the form of a valve (10) for the compressed and warmed conveying air (A) is present, which branch feeds the compressed and warmed conveying air (A) to the comminuting device (7).

## Revendications

1. Procédé permettant d'augmenter la réactivité d'un combustible humide dans une installation de fabrication de ciment, présentant les étapes suivantes:
- compression (1a) d'air d'alimentation (A), dans lequel l'air d'alimentation s'échauffe, avec échauffement consécutif (1b) de l'air d'alimentation comprimé (A) dans un échangeur de chaleur (2) par la chaleur perdue (C) d'un refroidisseur de clinker présent dans l'installation de fabrication de ciment, parallèlement à celle-ci
- broyage (2a) du combustible humide (B) dans un dispositif de broyage (7), et
- introduction (c) du combustible broyé (B) dans l'air d'alimentation comprimé (A),
- transport (d) du combustible broyé (B) dans l'air d'alimentation comprimé (A) jusqu'à un brûleur (4).

2. Procédé selon la revendication 1, dans lequel la chaleur perdue est prélevée dans l'air d'échappement primaire (C) ou l'air d'échappement secondaire (C) du refroidisseur de clinker.

3. Procédé selon la revendication 1, dans lequel l'échangeur de chaleur est disposé dans la conduite d'air tertiaire et la chaleur est ainsi prélevée dans la conduite d'air tertiaire.

4. Procédé selon l'une quelconque des revendications 1 à 3, dans lequel une conduite de dérivation (9) est connectée parallèlement à l'échangeur de chaleur (2), par laquelle on règle la température de l'air d'alimentation (A) arrivant au brûleur (4).

5. Procédé selon l'une quelconque des revendications 1 à 4, dans lequel on prélève une quantité partielle de gaz (A*) dans l'air d'alimentation comprimé (A) par un branchement sous la forme d'une soupape (10) immédiatement après l'échangeur de chaleur (2) et on l'envoie au dispositif de broyage (7).

6. Installation pour la mise en oeuvre du procédé selon l'une quelconque des revendications 1 à 5, présentant
- un compresseur (1) pour l'air d'alimentation (A),
- un échangeur de chaleur (2) suivant le compresseur (1), qui est disposé dans la conduite d'air d'échappement primaire ou secondaire d'un refroidisseur de clinker présent dans l'installation de fabrication de ciment,
- un dispositif de broyage (7) pour un combustible humide (B),
- un dispositif d'introduction (3) pour l'introduction de combustible broyé (B) dans l'air d'alimentation comprimé et chauffé (A),
- un brûleur.

7. Installation pour la mise en oeuvre du procédé selon l'une quelconque des revendications 1 à 5, présentant
- un compresseur (1) pour l'air d'alimentation (A),
- un échangeur de chaleur (2) suivant le compresseur (1), qui est disposé dans la conduite d'air tertiaire de l'installation de fabrication de ciment,
- un dispositif de broyage (7) pour un combustible humide (B),
- un dispositif d'introduction (3) pour l'introduction de combustible broyé (B) dans l'air d'alimentation comprimé et chauffé (A),
- un brûleur (4).

8. Installation selon la revendication 6 ou 7, **caractérisée en ce qu'**il est prévu une conduite de dérivation (9) parallèle à l'échangeur de chaleur (2), par laquelle la température dans l'air alimentation (A) atteignant le brûleur (4) peut être réglée.

9. Installation selon la revendication 6 ou 7, **caractérisée en ce qu'**il se trouve un branchement sous forme de soupape (10) pour l'air d'alimentation comprimé et chauffé (A), par lequel on envoie l'air d'alimentation comprimé et chauffé (A) au dispositif de broyage (7).
